# EUROPEAN PATENT APPLICATION

(11) **EP 1 366 848 A1**
(43) Date of publication of application: **03.12.2003**
(21) Application number: 03253361.4
(22) Date of filing: 29.05.2003
(51) Int. Cl.: B23P 15/00, F16C 33/32, B22F 9/08, B22F 1/00

(54) **Manufacturing method for metal spheres**

(30) Priority: 30.05.2002 JP 2002156841
(71) Applicant: MINEBEA CO., LTD., Kitasaku-gun, Nagano-ken (JP)
(72) Inventor: Shibasaki, Moriyoshi, Kitasaku-gun Nagano-ken 389-0293 (JP)
(74) Representative: Wilson Gunn Gee

(57) **Abstract**

A method of manufacturing metal spheres to prevent irregularities on the surface of the metal spheres. The method reduces the manufacturing time and makes it easy to manufacture extremely small diameter metal spheres.
The method comprises the step of:
dropping a piece (50a) of solid metal having a predetermined volume;
melting said piece of solid metal while dropping it; and
cooling and solidifying said dropped and melted piece (50b) of metal to obtain a metal sphere (50c).

## Description

This application claims all rights of priority to Japanese Patent Application No. 2002-156841 filed on May 30, 2002, still pending.

### FIELD OF THE INVENTION

The present invention relates to a method of manufacturing relatively minute metal spheres such as metal balls for miniature ball bearings.

### BACKGROUND OF THE INVENTION

Conventionally, small-diameter balls for miniature ball bearings (for example, diameters of approximately 1.0-5.0 mm) are formed by forging a short wire piece in a metal die. The short wire piece is previously cut from wire stock to a fixed length. A flashing operation is performed after forging to remove burrs by holding the ball between hard cast boards and rotating it under pressure. It is a common practice to maintain a surplus of material after the forging and flashing are completed. This surplus is later removed during several stages of precision grinding. Heat-treatment is repeatedly used between the grinding stages to relieve stress and to obtain an appropriate strength and durability.

The burrs eliminated in the flashing process are excess material caught between the metal dies or in air ventilation pores, etc. These burrs are eliminated in flashing primarily by being smashed. However, during flashing, burrs may hang over or around the surface. This can cause the formation of minute convexities on the surface.

In addition, during the cutting and forging of the wire stock, the cut surface on the side of the piece tends to curve concavely. This curve remains after flashing and causes a minute concavity on the surface.

These minute irregularities are not a problem if removed during the precision grinding process. However, the irregularities are not always removed after the final stage of the precision grinding. In order to avoid having these irregularities, an undesirably large surplus of material has to remain on each ball after the flashing is completed. Therefore, the time expended on the precision grinding process becomes longer and the material waste increases. Consequently, this manufacturing method is time consuming. Additionally, it is difficult to produce extremely small-diameter balls such as 1.0mm or smaller using the conventional manufacturing method.

### SUMMARY OF THE INVENTION

An object of the present invention is to provide a method for manufacturing metal spheres to reduce surface irregularities and reduce the manufacturing time.

Another object is to produce ball bearings having extremely small diameters.

These and other objects are accomplished by melting a solid metal while dropping it, then cooling and solidifying the dropped and melted metal to obtain a metal sphere. The metal becomes nearly spherical due to surface tension in the melting stage during dropping, and becomes a spherical solid metal by being cooled and solidified in that form. Accordingly, irregularities cannot form on the surface of the metal sphere and the metal sphere is nearly perfectly spherical. The solid metal can be manufactured into a metal sphere while being dropped, therefore, the manufacturing time is greatly reduced. If the spheres are precision ground, the time required for grinding is also greatly reduced because the amount of material ground is small so material costs are reduced. In addition, by making the solid metal to be melted very small, an extremely small-diameter metal sphere can be manufactured. It is also easy to melt the solid metal of small size. Therefore, the present invention is desirable for manufacturing extremely small-diameter metal spheres. By fixing the volume of the starting solid metal material, metal spheres of uniform diameter and of high dimensional accuracy can be mass-produced.

To prevent rust from oxidizing, it is preferable to perform the manufacturing method in an inert gas atmosphere. In addition, it is desirable to form the initial solid metal material into an easy-to-melt state such as wire, powder or flakes. This allows the manufacturing time to be further reduced and large-scale equipment to be avoided.

The above advantages and features are of representative embodiments only. It should be understood that they are not to be considered limitations on the invention as defined by the claims. Additional features and advantages of the invention will become apparent in the following description, from the drawings, and from the claims.

### BRIEF DESCRIPTION OF THE DRAWINGS

The invention is illustrated by way of example and not limitation and the figures of the accompanying drawings in which like references denote like or corresponding parts, and in which:

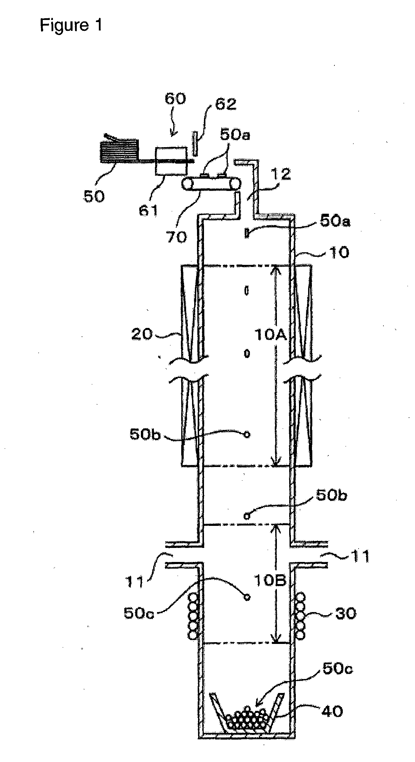

Figure 1 shows a cross sectional view of the metal sphere manufacturing equipment according to the present invention.

### DETAILED DESCRIPTION OF THE PREFERRED EMBODIMENT

Figure 1 shows a metal sphere manufacturing machine for implementing the method of the present invention. Cylindrical tower-shaped chamber 10 is the main part of the equipment. In the upper portion of the straight-standing chamber 10, a heater 20 heats the interior of chamber 10. In the lower portion, a cooling unit 30 cools the interior of chamber 10 by circulating coolant. In addition, multiple supply spouts 11 are provided to supply inert gases such as argon gas and nitrogen gas into chamber 10.

Chamber 10 comprises a heating zone 10A, which is heated by heater 20. A cooling zone 10B is cooled by the continuous supply of inert gas from gas supply spouts 11 and by cooling unit 30. Below cooling zone 10B, a recovery container 40 is provided. Recovery container 40 is inserted and removed from chamber 10 via a recovery opening (not shown).

Material injection entrance 12 is set above chamber 10, and the solid metal material is dropped into chamber 10 through material injection entrance 12. The material is preferably a small wire piece 50a that is cut into fixed length piece from a coiled wire stock 50. The size of piece 50a is set according to the volume of the sphere to be manufactured.

For example, where a metal sphere of 0.5mm is to be manufactured, the diameter of the piece 50a is approximately 0.4-0.6mm and the length is approximately 0.53-0.24mm. Wire stock 50 is made of conventional steel used for ball bearing balls, for example high carbon chrome bearing steel, carbon steel, stainless steel, etc. Coiled wire stock 50 is pulled from the end and piece 50a is cut out using of a cutting device 60.

Cutting device 60 is a press-and-cut type device having a fixed tool 61, into which wire stock 50 is inserted. Movable blade 62 moves up and down, and when in the down position cuts the end of wire stock 50 projecting from fixed tool 61. Wire stock 50 is continuously inserted into cutting device 60. The end protruding from fixed tool 61 is cut in sequence by cutting device 60. Piece 50a is cut from wire stock 50 and received onto transport device 70, comprised of conveyors or similar equipment. Then, piece 50a is transported to material injection entrance 12 via transport device 70 and falls from transport device 70 into chamber 10.

Piece 50, having been dropped through material injection entrance 12 into chamber 10, is heated and melted while dropping through heating zone 10a. Accordingly, the heating capacity of heater 20 and the length of heating zone 10a are set to be able to melt piece 50a while it passes through heating zone 10a. Melted piece 50b, having passed through heating zone 10A, is cooled and solidified while dropping through cooling zone 10B. Accordingly, the volume of inert gas supplied through gas supply spouts 11, the cooling capacity of cooling unit 30 and the length of cooling zone 10B are set to cool melted piece 50b to solidification.

After discharging the air in chamber 10 via gas supply spouts 11, inert gas is continuously supplied to chamber 10 from gas supply spouts 11, making the interior of chamber 10 an inert gas atmosphere. At the same time, heater 20 is operated and the coolant in cooling unit 30 is circulated.

Heating zone 10A is established in the upper portion of chamber 10 and a cooling zone 10B is established in the lower portion.

Once the above preparations are made, wire stock 50 is supplied continuously to cutting device 60 to be sequentially cut into pieces 50a of a fixed length. Then pieces 50a are dropped from material injection entrance 12 into chamber 10 via transportation device 70.

Piece 50a, which is dropped into chamber 10, melts while dropping through heating zone 10A. Melted piece 50b is transformed into an almost perfect sphere by the surface tension. Melted spherical piece 50b, having passed through heating zone 10A, is cooled and solidified as a sphere while passing through cooling zone 10B, becoming metal sphere 50c. Then metal sphere 50c is received by recovery container 40 where it is collected. When recovery container 40 is nearly full, the cutting of wire stock 50 and dropping of piece 50a is temporarily suspended, recovery container 40 is removed from chamber 10 and metal spheres 50c are moved to another location. The empty recovery container 40 is set back in chamber 10 and the above operation is restarted. By repeating the above operation, metal spheres 50c are mass-produced.

Metal spheres 50c obtained by the above method are semi-processed bearing balls after going through a heat-treatment process to obtain the desired strength and durability. A precision grinding process to improve shape precision and surface roughness is performed next. Then, the metal spheres are cleaned to make a finished product.

Melted pieces 50b become almost spherical through surface tension and become solid metal spheres 50c by being dropped and cooled to solidification. Accordingly, it is difficult for irregularities to form on the surface of these metal spheres 50c, making them almost perfectly spherical. In addition, piece 50a can be formed into metal sphere 50c while dropping, thus the conventional flashing process can be omitted to reduce the manufacturing time.

In addition, the duration of the precision grinding process for finishing the product is greatly reduced, and the grinding volume is small so material costs can be reduced. Furthermore, by controlling the length, that is to say the volume, of piece 50a, extremely small-diameter metal balls can be produced. By fixing the volume of the starting solid metal material, metal spheres of uniform diameter and of high dimensional accuracy can be mass-produced.

In addition, the interior of chamber 10 has an inert gas atmosphere preventing oxygen contamination of the metal spheres 50c and rusting due to oxidation. Furthermore, because the initial material piece 50a is a short wire, the present method results in a reduction of manufacturing time and avoids the use of large-scale equipment.

Cooling unit 30 is preferably placed below gas supply spouts 11. However, cooling unit 30 may be positioned above gas supply spouts 11 or two cooling units can be placed above and below gas supply spouts 11. In addition, if the melted piece 50b is sufficiently cooled and solidified by the inert gas, cooling unit 30 can be omitted. Alternatively, melted piece 50b can be cooled by operating cooling unit 30, without continuously supplying inert gas. In any case, cooling zone 10B is structured so that melted piece 50b can be cooled to solidification.

On the other hand, a device to heat piece 50a as it is being transported by transport device 70 to material injection entrance 12 can be added to facilitate melting. Moreover, it is also acceptable to make the structure such that metal sphere 50c is dropped into liquid, such as filling the recovery container 40 with oil or by placing an oil tub in the bottom of chamber 10. If metal spheres 50c are dropped into the liquid, the collision of metal sphere 50c is softened. Therefore, it is difficult to scratch the metal spheres 50c.

Metal spheres are obtained by melting solid metal while dropping and then cooling to solidification while continuing to drop. This process prevents irregularities on the surface of the metal spheres while reducing manufacturing time. Extremely small ball diameters are easy to manufacture and, it is possible to easily mass produce metal spheres of uniform diameter and high-precision dimensions.

For the convenience of the reader, the above description has focused on a representative sample of all possible embodiments, a sample that teaches the principles of the invention and conveys the best mode contemplated for carrying it out. The description has not attempted to exhaustively enumerate all possible variations. Other undescribed variations or modifications may be possible. For example, where multiple alternative embodiments are described, in many cases it will be possible to combine elements of different embodiments, or to combine elements of the embodiments described here with other modifications or variations that are not expressly described. Many of those undescribed variations, modifications and variations are within the literal scope of the following claims, and others are equivalent.

## Claims

1. A method of manufacturing a metal sphere, comprising the steps of:
dropping a piece of solid metal having a predetermined volume;
melting said piece of solid metal while dropping it; and
cooling and solidifying said dropped and melted piece of metal to obtain a metal sphere.

2. The method of manufacturing a metal sphere according to Claim 1 further comprising the step of cutting metal material to obtain said piece of solid metal of said predetermined volume.

3. The method of manufacturing a metal sphere according to Claim 1 or 2 further comprising the step of delivering said piece of solid metal to be dropped.

4. The method of manufacturing a metal sphere according to Claim 3 further comprising the step of pre-heating said piece of solid metal while delivering it to be dropped.

5. the method of manufacturing metal spheres according to any preceding Claim, wherein said steps of melting and cooling and solidifying are performed in an environment of inert gas.

6. The method of manufacturing metal spheres according to any preceding Claim, wherein said piece of solid metal is in an easy-to-melt state.
